**Europäisches Patentamt**

(19) **European Patent Office**

**Office européen des brevets**

(11) Numéro de publication: **0 143 025**
**B1**

(12) # FASCICULE DE BREVET EUROPÉEN

(45) Date de publication du fascicule du brevet:
02.09.87

(21) Numéro de dépôt: 84402035.4

(22) Date de dépôt: 10.10.84

(51) Int. Cl.⁴: **H 01 F 7/08**

(54) Electro-aimant bistable à plusieurs armatures comprenant un aimant permanent.

(30) Priorité: 16.11.83 FR 8318186

(43) Date de publication de la demande:
29.05.85 Bulletin 85/22

(45) Mention de la délivrance du brevet:
02.09.87 Bulletin 87/36

(84) Etats contractants désignés:
CH DE GB IT LI SE

(56) Documents cité:
FR-A-1 417 292
FR-A-2 358 006
FR-A-2 388 386
FR-A-2 520 152

(73) Titulaire: **LA TELEMECANIQUE ELECTRIQUE, 33 bis, avenue du Maréchal Joffre, F-92000 Nanterre (FR)**

(72) Inventeur: **Koehler, Gérard, 46 rue de Sèvres, F-92410 Ville d'Avray (FR)**

(74) Mandataire: **Bouju, André, Cabinet Bouju 38 avenue de la Grande Armée, F-75017 Paris (FR)**

EP 0 143 025 B1

## Description

La présente invention concerne un électro-aimant bistable comprenant plusieurs armatures qui comportent un aimant permanent.

Selon le brevet français 2 388 386, on connaît un électro-aimant comportant une armature de section en H qui, lors du fonctionnement de l'électro-aimant, se déplace suivant l'axe d'un aimant disposé au centre du H de l'armature. Cet électro-aimant comporte éventuellement deux armatures disposées en série, les liaisons entre les entrefers définis par les pièces polaires de ces armatures etant réalisées au moyen de culasses.

Le brevet allemand 2 407 184 décrit un électro-aimant comportant deux armatures de section en H disposées en séries et mobiles en rotation lors du fonctionnement de l'électro-aimant. Les entrefers de ces armatures sont reliés par des noyaux entourés par une bobine.

Les brevets français 2 293 044 et 2 298 866 décrivent un électro-aimant ayant un succession d'entrefers disposés entre deux pièces polaires coaxiales en forme d'hélice, l'une de celles-ci comportant un aimant permanent tandis que l'autre porte un bobinage. L'ensemble est agencé pour obtenir un mouvement de translation entre les deux pièces coaxiales.

Les inconvénients des électro-aimants connus résident surtout dans le fait qu'ils engendrent des flux de fuite importants par les culasses, car les ampèretours sont concentrés sur une petite partie seulement du circuit magnétique.

De plus, les forces mécaniques engendrées lors du fonctionnement de ces électro-aimants ne sont disponibles qu'en un ou deux endroits prédéterminés de ceux-ci, de sorte que ces forces sont difficiles à répartir.

Par ailleurs, les bobinages sont situés loin des aimants, donc sont peu efficaces.

Les électro-aimants classiques d'autre part ont un volume s'adaptant difficilement à des espaces disponibles spéciaux, tels que des tores de faible hauteur.

Certains électro-aimant sont utilisés pour commander des embrayages monostables. Ceux-ci présentent des problèmes d'échauffement et d'usure méanique et électrique des bagues de connexion.

Le but de la présente invention est de remédier aux inconvénients des réalisations connues.

L'électro-aimant bistable visé par l'invention, comporte un circuit magnétique entouré patiellement par un bobinage et est constitué par une succession de maillons raccordés les une aux autres par des entrefers, les maillons d'un premier type étant mobiles par rapport aux autres maillons d'un deuxième type, certains types de maillons comprenant un aimant permanent muni sur ses faces polaires de pièces polaires dont des extrémités définissent deux zones d'entrefer avec les maillons voisins de l'autre type, chaque zone d'entrefer étant susceptible d'engendrer alternativement deux forces antagonistes dont les directions sont parallèles aux directions d'aimantation des aimants permanents, deux forces engendrées simultanément par un même maillon après une excitation dans un sens donné du bobinage étant de même sens.

Suivant l'invention, cet électro-aimant est caractérisé en ce que chaque aimant permanent d'un type de maillon est soumis à l'influence du bobinage dont le champ est perpendiculaire à la direction d'aimantation dudit aimant permanent et dirigé vers l'une ou l'autre des extrémités des pièces polaires dont cet aimant est muni, de façon que l'électro-aimant ait la forme d'une chaîne fermée, pouvant suivre un trajet variable dans un plan et pouvant provoquer, le long de son parcours, des forces perpendiculaires à ce plan.

Ainsi, lorsque les bobines des maillons d'un certain type sont excitées, les maillons d'un autre type subissent une translation perpendiculaire au plan de la boucle fermée formée par l'électro-aimant et d'amplitude égale au jeu compris entre les maillons voisins.

Grâce à l'invention il est possible de répartir les forces d'une manière régulière autour du parcours correspondant à la boucle fermée formée par l'électro-aimant.

L'électro-aimant conforme à l'invention peut être appliqué avantageusement mais non limitativement à la réalisation d'un embrayage bistable dans lequel les efforts sont régulièrement répartis sur la périphérie du plateau mené, le fonctionnement bistable de l'électro-aimant permettant notamment d'assurer l'embrayage et le débrayage sans ressort de rappel, ni butée susceptible de s'user.

D'autres particularités et avantages de l'invention apparaîtront encore dans la description ci-après.

Aux dessins annexés donnés à titre d'exemples non limitatifs:

- la figure 1 est une vue en perspective d'un électro-aimant en forme de chaîne conforme à l'invention, les différents maillons de cette chaîne étant, dans un but de clarté, représentés séparés les une des autres,
- la figure 2 est une vue en coupe à échelle agrandie, perpendiculairement au plan de la chaîne, de trois maillons assemblés de celle-ci,
- la figure 3 est une vue en élévation des trois maillons assemblés représentés sur la figure 2,
- la figure 4 est une vue en coupe suivant l'axe d'un embrayage électromagnétique, commandé par un électro-aimant en forme de chaîne conforme à l'invention.
- la figure 5 est une vue analogue à la figure 1, d'une réalisation simplifiée de la chaîne.

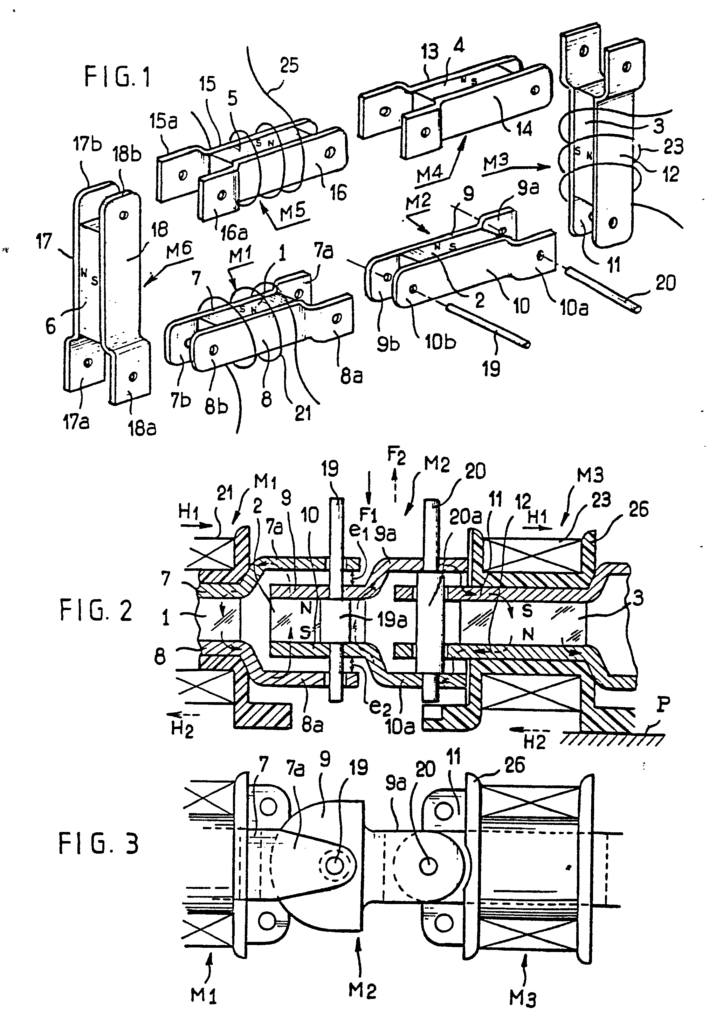

Dans la réalisation des figures 1 à 3, l'électro-aimant conforme à l'invention présente la forme d'une chaîne dont le circuit magnétique est constitué par une succession de couples de maillons (M1-M2, M3-M4, M5-M6) associés les uns aux autres de façon à réaliser une boucle fermée.

Chaque maillon M1, M2, M3, M4, M5, M6

2

comprend un aimant permanent 1, 2,... 6 muni sur ses faces polaires perpendiculairement à son axe de deux pièces polaires 7, 8; 9, 10; 11, 12; 13, 14; 15, 16; 17, 18 débordant de chaque côté de l'axe de l'aimant correspondant.

Sur la figure 1, les maillons M1, M2... M6 présentent des aimants et des pièces polaires identiques.

D'un côté de l'aimant, les extrémités 7a, 8a; 9a, 10a,... 17a, 18a des pièces polaires 7, 8; 9, 10;... 17, 18 sont cambrées en baïonnettes c'est-à-dire s'écartent du plan des faces polaires des aimants 1, 2,... 5, 6 de façon que ces extrémités 7a, 8a... 17a puissent s'engager avec un jeu prédéterminé: $e = e1 + e2$ (voir figure 2) sur les extrémités adjacentes 9b, 10b,... 17b, 18b, 7b, 8b non cambrées des maillons voisins M2... M6 et M1.

La liaison entre les différents maillons M1, M2,... M6 est réalisée au moyen de goupilles amagnétiques telles que 19, 20 engagées dans des trous pratiqués sur les extrémités 7a, 8a; 9b, 10b;... 17a, 18a; 7b, 8b engagées les unes sur les autres de sorte que les différents maillons M1, M2... M6 sont articulés les une aux autres suivant des axes perpendiculaires au plan de la boucle fermée qu'ils réalisent.

Les aimants permanents 1, 2, 3... 5, 6 ont des polarités S, N qui présentent des directions opposées pour les maillons voisins tels que M1 et M2,... M5 et M6.

Par ailleurs, les maillons d'ordre impair, c'est-à-dire M1, M3 et M5 sont entourés d'une bobine 21, 23, 25 représentée symbliquement sur la figure 1 et logée dans une carcasse en matière plastique telle que 26 (voir figures 2 et 3).

Sur la figure 2, on voit que la goupille 19 qui assemble le maillon M1 au maillon M2 présente une partie centrale épaulée 19a dont la longueur correspond à la largeur de l'aimant 2 de sorte que ses extrémités prennent appui contre les faces polaires 9 et 10. Les parties de la goupille 19 situées de part et d'autre de la partie centrale épaulée 19a sont serties dans des trous pratiqués dans les pièces polaires 9 et 10, mais peuvent tourner librement dans les trous ménagés dans les extrémités cambrées 7a, 8a du maillon M1.

Par ailleurs, la goupille 20 qui assemble les maillons M2 et M3 présente une partie centrale épaulée 20a dont la largeur correspond à la distance comprise entre les extrémités cambrées 9a et 10a des pièces polaires 9 et 10 du maillon M2. Cette partie centrale épaulée 20a peut tourner librement dans des trous pratiqués dans les pièces polaires 11 et 12 du maillon M3. Les parties de la goupille 20 situées de part et d'autre de la partie épaulée 20a sont serties dans des trous pratiqués dans les éxtremités cambrées 9a et 10a du maillon M2.

Le fonctionnement de l'électro-aimant en forme de chaîne que l'on vient de décrire est le suivant (voir figure 2).

Lorsque les bobines 21, 23 sont excitées suivant le champ $H_1$, un flux magnétique est engendré dans les pièces polaires suivant les flèches représentées en trait plein et le maillon M2 compris entre les maillons M1 et M3 entourés par les bobines et maintenues fixes par rapport à un plan P est soumis à une force $F_1$ parallèle aux goupilles 19, 20. Le maillon M2 subit un mouvement de translation suivant $F_1$ d'amplitude correspondant au jeu prédéterminé $e$. Il en est de même pour tous les maillons d'ordre pair de la chaîne, tels que les maillons M4 et M6 qui sont encadrés par des maillons entourés par des bobines. Ainsi tous les maillons d'ordre pair se déplacent simultanément suivant la direction $F_1$.

Inversement, lorsque les bobines 21, 23 sont excitées suivant le champ $H_2$ de sens inverse, un flux magnétique est engendré dans les pièces polaires suivant les flèches représentées en trait pointille et le maillon M2 ainsi que des maillons d'ordre pair sont soumis à une force $F_2$ dirigée en sens inverse de la force $F_1$.

L'électro-aimant conforme à l'invention présente ainsi un fonctionnement bistable. On remarque en particulier que chaque entrefer est encadré d'aimants permanents en amont et en aval de la circulation du flux.

On voit aussi que le sens de la circulation du flux dans la chaîne s'inverse lorsqu'on change le sens d'excitation des bobines.

Par ailleurs, on comprend que, grâce aux liaisons articulées comprises entre les maillons, la boucle fermée formée par l'électro-aimant peut s'adapter à des contours variés.

Les maillons M1, M2,... M6 au lieu d'être identiques peuvent être différents comme d'ailleurs représenté sur les figures 2 et 3 qui montrent notamment que les maillons impairs tels que M1 et M3 entourés par une bobine sont plus longs que les maillons pairs. Par ailleurs, les maillons pairs tels que M2 présentent avantageusement comme indiqué sur la figure 3, des pièces polaires 9 et 10 dont les extrémités opposées sont conformées en arcs de cercle, l'arc de cercle forme sur l'extrémité 9a ou 10a ayant un diamètre plus faible que celui formé sur l'extrémité opposée.

Cette disposition permet une rotation des maillons entre eux suivant un secteur angulaire etendu. Par ailleurs, les extrémités 7a et 8a du maillon M1 sont conformées en pointe de façon à obtenir des surfaces d'entrefer identiques entre les parties engagées les unes dans les autres des différents maillons.

Par ailleurs, les maillons pourraient être reliés les une aux autres suivant des angles fixes, par exemple pour former un rectangle ou toute autre figure géométrique fixe ou variable.

De plus, les maillons mobiles tels que M2 ou M4 pourraient être rendus solidaires et guidés par un axe perpendiculaire au plan de fixation.

D'autre part, les bobines pourraient également être placées sur les maillons pairs tels que M2, M4 et M6, à condition de prévoir un jeu d'assemblage pour permettre le mouvement de translation perpendiculaire au plan de la boucle formée par l'électro-almant. Dans un tel électro-aimant, la répartition des ampèretours serait très proche de la configuration idéale d'un tore.

Cependant, dans le cas de la réalisation représentée, comprenant une bobine pour deux maillons, la situation est déjà beaucoup plus favorable que dans le cas d'un électro-aimant classique dans lequel le retour du flux se fait avec des pertes de flux par une culasse non soumise a des ampèretours.

Par ailleurs, les pièces polaires pourraient également être cambrées vers l'intérieur de la chaîne de l'électro-aimant si les aimants permanents étaient plus hauts.

D'autre part, les maillons d'un ordre déterminé par exemple pair pourraient être réalisés au moyen de pièces polaires entièrement planes, tandis que les pièces polaires des autres maillons seraient alors combrées à leurs deux extremités opposées.

En outre, dans une autre variante, une seule des deux pièces polaires d'un maillon serait cambrée vers l'intérieur ou l'extérieur de la chaîne formée par l'électro-aimant.

Les aimants permanents peuvent être en caoutchouc magnétique étant donné que l'on dispose dans l'électro-aimant selon l'invention, de surfaces relativement grandes pour ces aimants.

L'électro-aimant conforme à l'invention peut être utilisé dans de nombreuses applications industrielles.

Ainsi, l'électro-aimant en forme de chaîne peut être disposé suivant un trajet fermé quelconque situé dans un plan.

Par exemple, cet électro-aimant peut être utilisé pour maintenir par ses bords une pièce en matière textile de forme variable, pendant qu'on effectue sur cette pièce un travail donné.

L'électro-aimant peut également être disposé suivant un trajet circulaire de façon à pouvoir répartir d'une manière régulière des forces sur un joint torique d'étanchéite. Une telle répartition régulière des forces est difficile à obtenir dans le cas d'un électro-aimant classique engendrant seulement une force au centre d'un tel joint torique.

Une autre application peut être envisagée pour commander des pôles de disjoncteurs en nombre variable, chaque pôle étant constitué par une chambre hermétique munie de traversées électriques pour un contact d'une phase et de traversées magnétiques pour actionner un maillon pair situé dans la chambre hermétique et portant un contact mobile.

D'autre part, si les bobines des maillons sont alimentées par des impulsions périodiques de sens alternés de fréquence donnée, on engendre un mouvement de vibration qui peut être utilisé par exemple pour trier des pièces ou pour réaliser une agitation.

Par ailleurs, dans le cas des embrayages monostables à électro-aimant central, se pose le problème d'amener le courant à la bobine tournante. Il est nécessaire à cet effet d'utiliser des bagues d'amenée de courant qui engendrent nécessairement des échauffements et qui s'usent inévitablement.

Cette difficulté est résolue au moyen de l'électro-aimant en forme de chaîne conforme à l'invention.

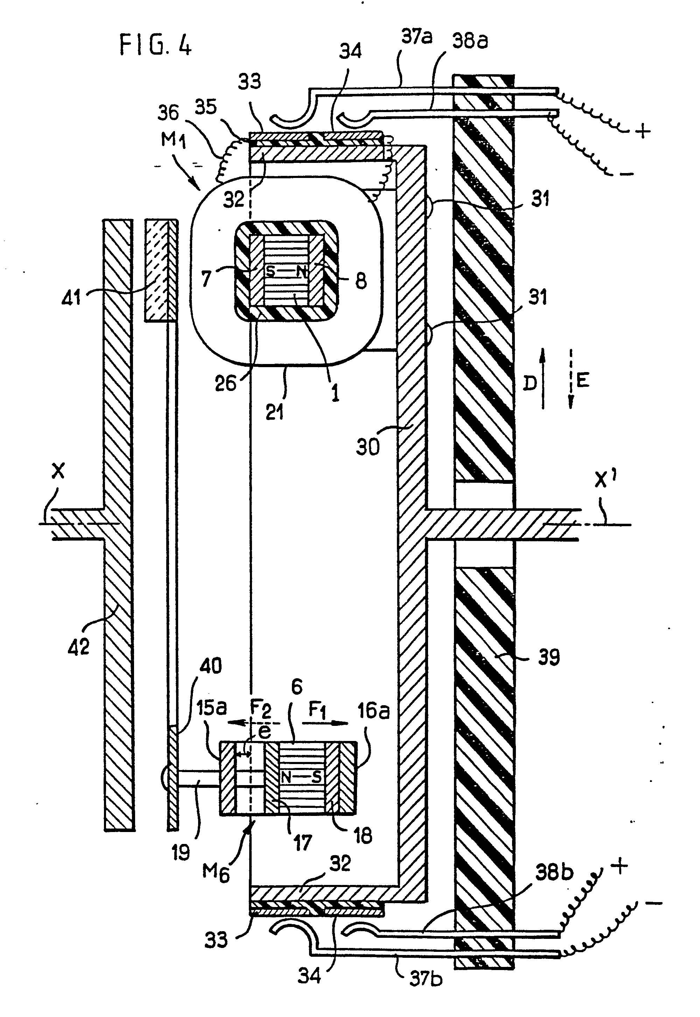

Ainsi, dans la réalisation de la figure 4, on a représenté un embrayage équipé d'un électro-aimant en forme de chaîne conforme à l'invention.

Tout autour du plateau menant 30 de l'embrayage, sont fixés, par exemple au moyen de rivets 31, tous les maillons d'ordre impair M1, M3, M5 munis d'une bobine. Pour la clarté de la figure, seul le maillon M1 entouré par la bobine 21 a été représenté.

Autour d'une collerette cylindrique 32 fixée à la périphérie du plateau 30 et entourant les maillons de l'électro-aimant, sont fixée deux bagues parallèles 33 et 34 concentriques à l'axe X-X' de l'embrayage. Ces bagues sont isolées de la collerette 32 au moyen d'une couche isolante 35 et sont connectées électriquement à la bobine 21 au moyen de fils 36.

En regard des bagues 33, 34, sont disposées, de façon diamétralement opposées, deux paires de balais 37a, 38a; 37b, 38b fixées à une plaque en matière isolante 39 parallèle au plateau 30.

Lorsqu'on déplace cette plaque 39 dans la direction E, on amène les balais 37a, 38a en contact avec les bagues 33, 34, ce qui provoque l'excitation des bobines telles que 21 qui entourent les maillons impairs tels que M1.

Inversement, lorsqu'on déplace la plaque 39 dans la direction inverse D, on amène les balais 37b, 38b dont les polarités sont opposées aux deux autres balais, en contact avec les bagues 33, 34, et on excite les bobines des maillons impairs tels que M1 dans une direction opposée.

Les maillons mobiles tels que M6 placés entre les maillons impairs sont fixés au moyen de leurs goupilles telles que 19 à une couronne élastique 40, par exemple en bronze axée sur l'axe X-X' et située à l'opposé du plateau 30 par rapport aux maillons M1... M6.

La couronne 40 porte en regard de chaque maillon impair tel que M1, une garniture de friction 41. En face de cette couronne 40 du côté des garnitures 41, est disposé un disque 42 axé sur X-X' jouant dans l'embrayage le rôle de plateau mené.

Le fonctionnement de cet embrayage est le suivant:

Quand on déplace momentanément la plaque 39 dans la direction E, les bobines des maillons tels que M1 sont excitées dans une direction telle que les axes tels que 19 des maillons mobiles tels que M6 se déplacent dans la direction $F_2$. La couronne élastique 40 se déforme de façon à appliquer les garnitures 41 sur le disque 42, ce qui provoque l'embrayage entre le plateau menant et le plateau mené.

Le débrayage est produit en déplaçant momentanément le plateau 39 dans la direction inverse D, ce qui provoque une force F1.

Par rapport aux embrayages électromagnétiques classiques, l'embrayage décrit ci-dessus présente l'avantage de ne comporter ni ressort de rappel ni butée d'embrayage. De plus, il n'engendre pas de consommation permanente de courant, ni de frottement des balais étant donné que ceux-ci ne prennent appui sur les bagues correspondantes que pendant la durée du débrayage ou de l'embrayage.

Par ailleurs, l'usure des garnitures 41 est compensée par la flexion de la couronne 40. Cet embrayage pourrait ne comporter qu'une seule paire de balais tels que 37a et 38a en prévoyant un dispositif permettant d'inverser les polarités de ceux-ci.

Bien entendu, le nombre des maillons M1,... M6 peut être augmenté ou diminué suivant la taille de l'embrayage.

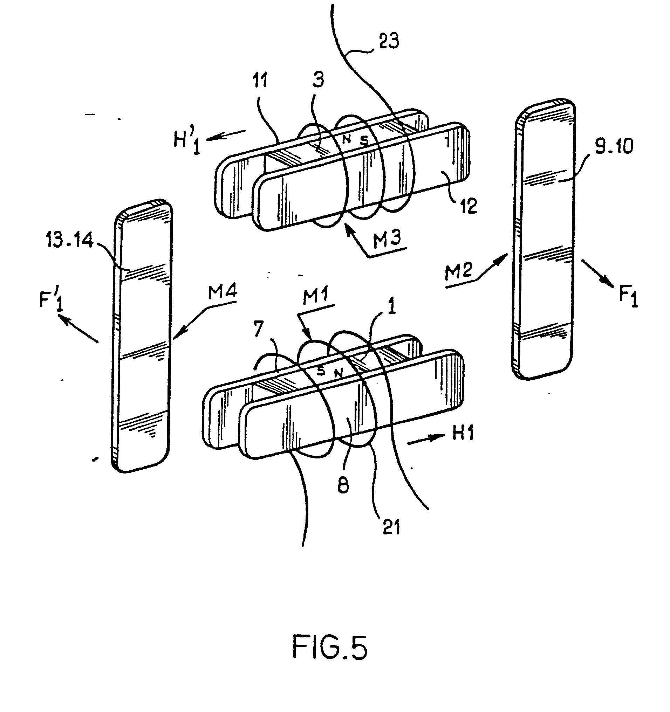

Sans sortir du domaine de l'invention, il est possible de simplifier la chaîne formée par les maillons en supprimant les aimants 2, 4, 6... des maillons d'ordre pair. On aboutit ainsi a la figure 5, analogue à la figure 1, mais avec 4 maillons M1 à M4 seulement.

Sur cette figure, on voit que le maillon M1 est identique au maillon M1 de la figure 1, à l'exception des pièces polaires 7 et 8 qui sont planes, sans cambrage en baïonnette à une de leurs extrémités. De plus, le maillon M2 est constitué par une simple plaque plane 9, 10 de forme semblable à celle des pièces polaires 9 et 10 du maillon M2 de la figure 1. Le maillon M3 est identique au maillon M1, de même M4 et M2. Les extrémités des plaques 9, 10 et 13, 14 pénètrent respectivement entre les extrémités des pièces polaires 7 et 8, et 11 et 12. Un champ H1 de la bobine 21 et H'1 de la bobine 23 donne une force F1 sur la plaque 9, 10, dirigée ici vers l'avant de la figure et une force F'1 sur la plaque 13, 14, dirigée vers l'arrière de la figure. Ces forces sont donc maintenant de directions opposées, et il faut avoir un nombre pair de paires de maillons. De plus, un entrefer n'est plus encadré par deux aimants permanents, mais la réalisation de cette chaîne est simplifiée.

**Revendications**

1. Electro-aimant bistable dont le circuit magnétique, entouré partiellement par un bobinage est constitué par une succession de maillons (M1, M2, M3, M4, M5, M6) raccordés les une aux autres par des entrefers, les maillons d'un premier type étant mobiles par rapport aux autres maillons d'un deuxième type, certains types de maillons comprenant un aimant permanent (1,3,5,...) muni sur ses surfaces polaires de pièces polaires (7, 8; 11, 12; 15 16;...) dont des extrémités définissent deux zones d'entrefer avec les maillons voisins de l'autre type, chaque zone d'entrefer étant susceptible d'engendrer alternativement deux forces antagonistes dont les directions sont parallèles aux directions d'aimantation des aimants permanents, deux forces engendrées simultanément par un même maillon après une excitation dans un sens donné du bobinage étant de même sens, caractérisé en ce que chaque aimant permanent (1, 3, 5) d'un type de maillon (M1, M3, M5) est soumis à l'influence d'un bobinage (21, 23, 25) dont le champ est perpendiculaire à la direction d'aimantation dudit aimant permanent et dirigé vers l'une ou l'autre des extrémités des pièces polaires (7, 8; 11, 12; 15, 16) dont cet aimant est muni, de façon que l'électro-aimant ait la forme d'une chaîne fermée, pouvant suivre un trajet variable dans un plan P et pouvant provoquer, le long de son parcours, des forces F1, F2 perpendiculaires à ce plan.

2. Electro-aimant selon la revendication 1, caractérisé en ce que les maillons fixes (M1, M3, M5) du deuxième type comportent chacun un aimant permanent (1, 3, 5) muni de pièces polaires (7, 8; 11, 12; 15, 16) et entouré par une bobine (21, 23, 25).

3. Electro-aimant selon la revendication 2, caractérisé en ce que les maillons mobiles du premier type (M2, M4, M6) comprennent également chacun un aimant permanent (2, 4, 6) muni de pièces polaires (9, 10; 13, 14; 17, 18) de façon à ce que chaque entrefer soit encadré par un aimant en aval et un aimant en amont par rapport au sens du flux magnétique.

4. Electro-aimant selon l'une des revendications 1 à 3, caractérisé en ce que le déplacement des maillons mobiles est guidé par des goupilles amagnétiques (19, 20) traversant les extrémités (7a, 8a; 9b, 10b;...) en regard des pièces polaires appartenant à des maillons de type différent.

5. Electro-aimant selon la revendication 3 ou 4, caractérisé en ce que les pièces polaires (7, 8; 9 10,...) d'un maillon sont identiques.

6. Electro-aimant selon la revendication 5, caractérisé en ce que les pièces polaires (7, 8; 9, 10,...) de maillons d'ordre différent (M1, M2,...) sont identiques.

7. Electro-aimant selon la revendication 5 ou 6, caractérisé en ce que les pièces polaires (7, 8; 9, 10;...) d'un maillon sont cambrées de façon a augmenter l'ecartement de ces pièces sur les extrémités (7a, 8a; 9a, 10a,...) débordant d'un côté de l'aimant (1, 2,...).

8. Electro-aimant selon l'une quelconque des revendications precedentes, caractérisé en ce qu'il est monté sur un plateau (30) ou analogue tournant autour d'un axe de rotation (X-X') et en ce que les bobines (21,...) des maillons (M1,...) sont connectées électriquement à des bagues (33, 34) concentriques audit axe et reliées à des moyens (37a, 38a; 37b, 38b, 39) permettant d'exciter les bobines (21, ...) dans un sens déterminé ou inverse de celui-ci de façon à engendrer une force ($F_1$, $F_2$) dans la direction de l'axe (X-X').

9. Electro-aimant conforme à la revendication 8, caractérisé en ce que ledit plateau (30) est le plateau menant d'un embrayage électromagnétique bistable à la périphérie duquel sont fixés les maillons (M1,...) entourés par une bobine

(21,...), en ce que les maillons mobiles (M6,...) sont fixés à une couronne élastique (40) portant des garnitures de friction (41) disposées en regard du plateau mené (42) de l'embrayage, de façon que ladite force (F$_1$, F$_2$) ait pour effet d'appliquer lesdites garnitures (41) contre le plateau mené (42) ou de les en écarter, suivant le sens d'excitation des bobines (21,...).

10. Electro-aimant selon l'une des revendications 8 ou 9, caractérisé en ce que les moyens permettant d'exciter les bobines comprennent des balais (37a, 38a; 37b, 38b) reliés à des moyens (39) permettant de les amener sélectivement en contact avec les bagues (33, 34).

11. Electro-aimant selon l'une quelconque des revendications 1 à 10, caractérisé en ce que les bobines (21, 23, 25) sont alimentées par des impulsions périodiques de sens alternés, de façon à obtenir un mouvement vibratoire.

12. Electro-aimant selon la revendication 1 ou 2, caractérisé en ce qu'il comprend des maillons (M1, M3) dont les pièces polaires (7, 8; 11, 12) sont planes entourées par une bobine (21, 23) et des maillons (M2, M4) reliés aux extrémités des maillons (M1, M3) et constitués par de simples plaques planes (9, 10; 13, 14), et en ce qu'il y a un nombre pair de paires de maillons (M1, M2; M3, M4...).


**Patentansprüche**

1. Bistabiler Elektromagnet, dessen teilweise von einer Wicklung umgebener Magnetkreis durch eine Aufeinanderfolge von Gliedern (M1, M2, M3, M4, M5, M6) gebildet ist, welche über Eisenspalte aneinander angeschlossen sind, wobei die Glieder eines ersten Typs in Bezug auf die anderen Glieder eines zweiten Typs beweglich sind, wobei ferner bestimmte Typen von Gliedern einen Permanentmagnet (1, 3, 5,...) aufweisen, der auf seinen Polflächen mit Polstücken (7, 8; 11, 12; 15, 16; ...) versehen ist, deren Ende zwei Eisenspaltzonen mit den benachbarten Gliedern des anderen Typs bilden, wobei ferner jede Eisenspaltzone geeignet ist, um abwechselnd zwei einander entgegenwirkende Kräfte zu erzeugen, deren Richtungen parallel zu den Magnetisierungsrichtungen der Permanentmagneten sind, und wobei ferner zwei gleichzeitig durch dasselbe Glied nach einer Erregung der Wicklung in einem gegebenen Sinne erzeugte Kräfte denselben Sinn haben, dadurch gekennzeichnet, daß jeder Permanentmagnet (1, 3, 5) eines Typs von Glied (M1, M3, M5) unter dem Einfluß einer Wicklung (21, 23, 25) steht, deren Feld senkrecht zur Magnetisierungsrichtung des Permanent magneten und gegen das eine oder andere der Enden der Polstücke (7, 8; 11, 12; 15, 16) gerichtet ist, womit dieser Magnet versehen ist, so daß der Elektromagnet die Form einer geschlossenen Kette aufweist, welche einer variablen Bahn in einer Ebene P folgen kann und entlang ihrer Bahn Kräfte F1, F2 erzeugen kann, die senkrecht zu dieser Ebene sind.

2. Elektromagnet nach Anspruch 1, dadurch gekennzeichnet, daß die festen Glieder (M1, M3, M5) vom zweiten Typ jeweils einen Permanentmagnet (1, 3, 5) aufweisen, der mit Polstücken (7, 8; 11, 12; 15, 16) versehen und von einer Wicklung (21, 23, 25) umgeben ist.

3. Elektromagnet nach Anspruch 2, dadurch gekennzeichnet, daß die beweglichen Glieder vom ersten Typ (M2, M4, M6) ferner jeweils einen Permanentmagnet (2, 4, 6) umfassen, der mit Polstücken (9, 10; 13, 14; 17, 18) versehen ist, so daß jeder Eisenspalt von einem flußabwärts liegenden Magnet und von einem flußaufwärts liegenden Magnet, bezogen auf den Sinn des Magnetflusses, eingerahmt ist.

4. Elektromagnet nach einem der Ansprüche 1 bis 3, dadurch gekennzeichnet, daß die Bewegung der beweglichen Glieder durch unmagnetische Stifte (19, 20) geführt wird, welche die Enden (7a, 8a; 9b, 10b;...) gegenüber den Polstücken, welche zu Gliedern von anderem Typ gehören, durchqueren.

5. Elektromagnet nach Anspruch 3 oder 4, dadurch gekennzeichnet, daß die Polstücke (7, 8; 9, 10;...) eines Gliedes einander gleich sind.

6. Elektromagnet nach Anspruch 5, dadurch gekennzeichnet, daß die Polstücke (7, 8; 9, 10;...) von Gliedern anderer Ordnungszahl (M1, M2,...) einander gleich sind.

7. Elektromagnet nach Anspruch 5 oder 6, dadurch gekennzeichnet, daß Polstücke (7, 8; 9, 10; ...) eines Gliedes derart gebogen sind, daß der Abstand dieser Stücke an den Enden (7a, 8a; 9a, 10a,...), welche auf einer Seite des Magneten (1, 2,...) überstehen, vergrößert wird.

8. Elektromagnet nach einem der vorstehenden Ansprüche, dadurch gekennzeichnet, daß er an einer Platte (30) oder dergleichen angebracht ist, welche um eine Drehachse (X-X') drehbar ist, und daß die Wicklungen (21,...) der Glieder (M1,...) elektrisch an mit dieser Achse konzentrische Ringe (33, 34) angeschlossen und mit Mitteln (37a, 38a; 37b, 38b, 39) verbunden sind, die es gestatten, die Wicklungen (21,...) in einem gegebenen Sinn oder hierzu entgegengesetzten Sinn zu erregen, so daß eine Kraft (F$_1$, F$_2$) in der Richtung der Achse (X-X') erzeugt wird.

9. Elektromagnet nach Anspruch 8, dadurch gekennzeichnet, daß die genannte Platte (30) die Antriebsplatte einer bistabilen elektromagnetischen Kupplung ist, an deren Umfang die Glieder (M1,...) umgeben von einer Wicklung (21,...) befestigt sind, daß die beweglichen Glieder (M6,...) an einem elastischen Kranz (40) befestigt sind, welcher Reibungsbeläge (41) trägt, die gegenüber der Abtriebsplatte (42) der Kupplung angeordnet sind, so daß die genannte Kraft (F$_1$, F$_2$) zur Wirkung hat, daß die genannten Beläge (41) gegen die Abtriebsplatte (42) angedrückt werden oder von ihr entfernt werden, je nach dem Erregungssinn der Wicklungen (21,...).

10. Elektromagnet nach einem der Ansprüche 8 und 9, dadurch gekennzeichnet, daß die Mittel, welche es gestatten, die Wicklungen zu erregen, Schleifer (37a, 38a; 37b, 38b) umfassen, die an Mittel (39) angeschlossen sind, welche es gestatten, sie selektiv in Kontakt mit den Ringen (33, 34) zu bringen.

11. Elektromagnet nach einem der Ansprüche 1 bis 10, dadurch gekennzeichnet, daß die Wicklungen (21, 23, 25) durch periodische Impulse von alternierendem Sinn gespeist werden, so daß eine Vibrationsbewegung erhalten wird.

12. Elektromagnet nach Anspruch 1 oder 2, dadurch gekennzeichnet, daß er Glieder (M1, M3) enthält, deren Polstücke (7, 8; 11, 12) eben und von einer Wicklung (21, 23) umgeben sind, sowie Glieder (M2, M4) enthält, welche an die Enden der Glieder (M1, M3) angeschlossen und durch einfache ebene Platten (9, 10; 13, 14) gebildet sind, und daß eine gerade Anzahl von Gliederpaaren (M1, M2; M3, M4;...) vorgesehen ist.

**Claims**

1. Bistable electromagnet whose magnetic circuit, partially surrounded by a winding is constituted by a series of links (M1, M2, M3, M4, M5, M6) interconnected by air gaps, the links of a first type being movable relative to the other links of a second type, certain types of links comprising a permanent magnet (1, 3, 5,...) provided on its pole faces with pole-pieces (7, 8; 11, 12; 15, 16;...) whose ends define two air-gap zones with the neighbouring links of the other type, each air-gap zone being capable of generating alternately two oppositely-acting forces whose directions are parallel to the directions of magnetization of the permanent magnets, two forces generated simultaneously by a same link after excitation in a given direction of the winding being of the same direction, characterized in that each permanent magnet (1, 3, 5) of one type of link (M1, M3, M5) is subjected to the influence of a winding (21, 23, 25) whose field is perpendicular to the direction of magnetization of said permanent magnet and directed toward one or the other of the ends of the pole-pieces (7, 8; 11, 12; 15, 16) with which this magnet is provided in such a manner that the electromagnet has the shape of a closed chain, which can follow a variable path in a plane P and is capable of giving rise along its path to forces F1, F2 perpendicular to this plane.

2. Electromagnet according to claim 1, characterized in that the fixed links (M1, M3, M5) of the second type each comprise a permanent magnet (1, 3, 5) provided with pole-pieces (7, 8; 11, 12; 15, 16) and surrounded by a winding (21, 23, 25).

3. Electromagnet according to claim 2, characterized in that the movable links of the first type (M2, M4, M6) also each comprise a permanent magnet (2, 4, 6) provided with pole pieces (9, 10; 13, 14; 17, 18) in such a manner that each air-gap is surrounded by an upstream magnet and a downstream magnet with respect to the direction of the magnetic flux.

4. Electromagnet according to one of claims 1 to 3, characterized in that the movement of the movable links is guided by nonmagnetic pins (19, 20) traversing the ends (7a, 8a; 9b, 10b;...) facing the pole-pieces which form part of links of different type.

5. Electromagnet according to claim 3 or 4, characterized in that the pole-pieces (7, 8; 9, 10,...) of a link are identical.

6. Electromagnet according to claim 5, characterized in that the pole-pieces (7, 8; 9, 10,...) of links of different order (M1, M2,...) are identical.

7. Electromagnet according to claim 5 or 6, characterized in that the pole-pieces (7, 8; 9, 10;...) of a link are bent so as to improve the spacing of these members on the ends (7a, 8a; 9a, 10a,...) which project on one side of the magnet (1, 2,...).

8. Electromagnet according to any one of the preceding claims, characterized in that it is mounted on a plate (30) or the like which rotates about an axis of rotation (X-X') and that the windings (21,...) of the links (M1,...) are electrically connected to rings (33, 34) concentric with said axis and connected to means (37a, 38a; 37b, 38b, 39) permitting excitation of the windings (21,...) in a predetermined direction or in the opposite direction so as to generate a force (F1, F2) in the direction of the axis (X-X').

9. Electromagnet according to claim 8, characterized in that said plate (30) is the drive plate of a bistable electromagnetic clutch at the periphery of which are secured the links (M1,...) surrounded by a winding (21,...), that the movable links (M6,...) are secured to a resilient crown (40) carrying friction linings (41) disposed opposite to the driven plate (42) of the clutch, in such a manner that said force ($F_1$, $F_2$) has the effect of applying said linings (41) against the driven plate (42) or to move them away therefrom, according to the direction of excitation of the windings (21,...).

10. Electromagnet according to one of claims 8 or 9, characterized in that the means permitting excitation of the windings comprise brushes (37a, 38a; 37b, 38b) connected to means (39) for bringing them selectively into contact with the rings (33, 34).

11. Electromagnet according to any one of claims 1 to 10, characterized in that the windings (21, 23, 25) are supplied with periodic pulses of alternate direction so as to obtain a vibratory movement.

12. Electromagnet according to claim 1 or 2, characterized in that it comprises links (M1, M3) whose pole-pieces (7, 8; 11, 12) are flat and surrounded by a winding (21, 23) and links (M2,

**0 143 025**

M4) connected to the ends of the links (M1, M3) and constituted by simple flat plates (9, 10; 13, 14), and that there is an even number of pairs of links (M1, M2; M3, M4...).

FIG. 1

FIG. 2

FIG. 3

1

FIG. 4

FIG.5